# EUROPÄISCHE PATENTANMELDUNG

(11) **EP 2 369 730 A2**
(43) Veröffentlichungstag der Anmeldung: **28.09.2011**
(21) Anmeldenummer: 11158842.2
(22) Anmeldetag: 18.03.2011
(51) Int. Cl.: H02M 5/22

(54) **Verfahren zum Einstellen der Ausgangsleistung eines Leistungstellers und Leistungssteller**

(30) Priorität: 24.03.2010 DE 102010012681
(71) Anmelder: AEG Power Solutions B.V., 1161 AG Zwanenburg (NL)
(72) Erfinder: Hesse, Christian, 59581, Warstein (DE)
(74) Vertreter: Graefe, Jörg

(57) **Zusammenfassung**

Die Erfindung betrifft ein Verfahren zum Einstellen der Ausgangsleistung eines Leistungsstellers bei dem der Leistungssteller während einer Einschaltzeit (Tₑ) innerhalb eines Taktes (T) einen Strom von einem Eingang zu einem Ausgang des Leistungsstellers durchlässt, wobei der Takt (T) eine Länge hat, die ein Vielfaches einer Periode einer den Strom treibenden Spannung am Eingang ist, wobei der Leistungssteller so eingestellt wird, das die Einschaltdauer (Tₑ) in einem eingeschwungenen Zustand wenigstens einen Teil einer halben Periode oder ganzen Periode der Eingangsspannung und längstens alle Perioden des Taktes (T) umfasst und wobei durch einen Phasenanschnitt oder einen Phasenabschnitt während einer halben Periode oder ganzen Periode des Taktes die Leistung stufenlos einstellbar ist.

## Beschreibung

Die vorliegende Erfindung betrifft ein Verfahren zum Einstellen der Ausgangsleistung eines Leistungsstellers und einen Leistungssteller, der mit diesem Verfahren betrieben wird.

In der Druckschrift "Elektronische Leistungssteller" von Manfred Schleicher und Winfried Schneider, ISBN-13: 978-3935742-04-7 wird beschrieben, wie ein Thyristor-Leistungssteller betrieben werden kann. Es sind zwei Betriebsarten beschrieben, nämlich die bekanntere Phasenanschnittsteuerung und die Schwingungspaketsteuerung, die vielfach, so auch in der Druckschrift, als lmpulsgruppenbetrieb oder als Vollschwingungsprinzip bezeichnet wird.

Anders als bei der Phasenschnittsteuerung werden bei der Schwingungspaketsteuerung nur vollständige Sinuswellenzüge zum Verbraucher durchgelassen. Die Einstellung der Leistung erfolgt über die Änderung einer Einschaltdauer während eines vorgegebenen Taktes. Die Einschaltdauer ist die Zeit, während der ein Strom über den Leistungssteller zu einem angeschlossenen Verbraucher fließt. Die Länge des Taktes ist vorgegeben und konstant. Sie beträgt ein Vielfaches der Periode einer am Eingang des Leistungsstellers anliegenden Spannung. Das Verhältnis aus Einschaltdauer und Taktlänge entspricht dem Verhältnis der übertragenen Leistung zur maximal übertragbaren Leistung.

Ein Nachteil der Schwingungspaketsteuerung ist, dass die während eines Taktes übertragene Leistung nicht stufenlos eingestellt werden kann. Vielmehr können nur diskrete Leistungsstufen eingestellt werden, die durch die maximal übertragbare Leistung und die Anzahl der Perioden des Stromes während des Taktes vorgegeben ist.

Können zum Beispiel maximal 1000 W während eines Taktes von 1 Sekunde bei einem Strom mit 50 Hz Frequenz übertragen werden, kann die Leistung nur in Stufen von 20 W eingestellt werden.

Soll dagegen von dem Leistungsteller eine Leistung eingestellt werden, die zwischen zwei Stufen liegt, beispielsweise von 510 W, kann man sich bei der Schwingungspaketsteuerung damit behelfen, dass aufeinanderfolgend während der Takte entweder 500 W oder 520 W übertragen werden. Im zeitlichen Mittel ergibt sich dann eine Leistung von 510 W. Ist diese Art der Einstellung der Zwischenstufen bei Werten, die in der Mitte zwischen zwei Stufen liegen einfach, ist dies bei Werten, die nicht mittig zwischen zwei Stufen liegen vielfach komplexer, zum Beispiel bei einem einzustellenden Wert von 507 W oder 513 W.

Ein Nachteil bei der Einstellung der Zwischenstufen ist, dass die Leistung erfassende Messinstrumente von Takt zu Takt zwischen Leistungswerten schwanken.

Hier setzt die vorliegende Erfindung an.

Der vorliegenden Erfindung liegt das Problem zugrunde, bei einer Schwingungspaketsteuerung mit einfachen Mitteln eine feinere Leistungseinstellung zu ermöglichen ohne dass es zu schwankenden Messwertanzeigen kommt.

Diese Aufgabe wird erfindungsgemäß dadurch gelöst, dass der Leistungssteller so eingestellt wird, das die Einschaltdauer in einem eingeschwungenen Zustand wenigstens einen Teil einer halben Periode der Eingangsspannung und längstens alle Perioden des Taktes umfasst, wobei durch einen Phasenanschnitt oder einen Phasenabschnitt während einer halben Periode oder einer ganzen Periode des Taktes die Leistung stufenlos einstellbar ist.

Grundsätzlich wird auch nach dem erfindungsgemäßen Verfahren die elektrische Energie innerhalb eines Taktes durch ein Paket von Schwingungen vom Eingang des Leistungsstellers zum Ausgang des Leistungsstellers übertragen. Im Unterschied zu der bekannten Schwingungspaketsteuerung erfolgt aber wenigstens während einer halben Periode oder einer ganzen Periode der Einschaltzeit ein Phasenanschnitt oder ein Phasenabschnitt. Damit ist es möglich die übertragene Leistung stufenlos einzustellen.

Im Unterschied zu einer Phasenanschnitt- oder Phasenabschnittsteuerung erfolgt beim erfindungsgemäßen Verfahren während eines Taktes nicht bei allen halben Perioden ein Phasenanschnitt oder ein Phasenabschnitt. Vielmehr ist es möglich während keiner, während einer oder während mehrer halben Perioden oder ganzen Perioden der Einschaltzeit einen Phasenanschnitt oder einen Phasenabschnitt vorzunehmen. Vorzugsweise erfolgt der Phasenanschnitt oder der Phasenabschnitt während genau einer halben Periode oder einer ganzen Periode während des Taktes oder der Einschaltzeit.

Erfolgt der Phasenanschnitt oder -abschnitt während einer Periode oder mehrer (aber nicht aller) ganzen Perioden ist der Phasenanschnittswinkel bzw. der Phasenabschnittswinkel für die positive Halbwelle bzw. die negative Halbwelle vorzugsweise gleich.

Ergänzt wird das erfindungsgemäße Verfahren durch ein Verfahren zum Einstellen der Ausgangsleistungen von parallel geschalteten Leistungsstellern, wobei die Leistung der Leistungssteller nach dem erfindungsgemäßen Verfahren eingestellt wird. Eine Besonderheit des Verfahrens zum Einstellen der Ausgangsleistung von parallel geschalteten Leistungsstellern ist es, dass die Einschaltzeitpunkte und/oder Abschaltzeitpunkte der Leistungssteller so auf einander abgestimmt sind, dass während einer halben Periode oder einer ganzen Periode eines Taktes nicht bei allen Leistungsstellern ein Phasenanschnitt oder ein Phasenabschnitt erfolgt. Erfolgt nämlich der Phasenanschnitt oder der Phasenabschnitt bei allen parallel geschalteten Leistungsstellern während einer halben Periode oder einer ganzen Periode, ist der Oberwellenanteil in dieser halben Periode oder ganzen Periode im Vergleich zu den anderen halben Perioden oder ganzen Perioden des Taktes stark erhöht. Werden dagegen die Phasenanschnitte und/oder Phasenabschnitte gleichmäßig über verschiedene halbe Perioden oder ganzen Perioden des Taktes verteilt, ist auch der Oberwellenanteil gleichmäßig, was eine gleichmäßige Verteilung der Blindleistung und eine Vermeidung von hohen Blindleistungen zur Folge hat.

Erfindungsgemäß ist es möglich, dass während einer halben Periode oder ganzen Periode eines Taktes bei genau einem Leistungssteller ein Phasenanschnitt oder ein Phasenabschnitt erfolgt.

Ebenso ist es möglich, dass während einer halben Periode oder ganzen Periode eines Taktes bei einem Leistungssteller ein Phasenabschnitt mit einem Phasenabschnittswinkel erfolgt und bei einem anderen Leistungssteller ein Phasenanschnitt mit einem Phasenanschnittswinkel erfolgt und die Summe des Phasenabschnittwinkels und des Phasenanschnittswinkels 180° beträgt.

Ein für ein erfindungsgemäßes Verfahren geeigneter und eingerichteter Leistungssteller weist eine Steuerung und einen Leistungshalbleiter auf, wobei mit der Steuerung der Leistungshalbleiter zum Anfang und während einer halben oder ganzen Periode zündbar bzw. zum Anfang und während einer halben Periode abschaltbar ist.

Aus dem Stand der Technik sind Leistungssteller bekannt, die mit einer Schwingungspaketsteuerung betrieben werden und an die Trafolasten angeschlossen sind. Sind Trafolasten angeschlossen, kann der so genannte Rush-Effekt auftreten. Dieser kann minimiert werden, wenn man beim Einschalten während der ersten halben Periode der Einschaltzeit einen Phasenanschnitt vornimmt.

Ebenso ist es möglich einen Softstart durch einen so genannten Phasenanschnittstart zu realisieren.

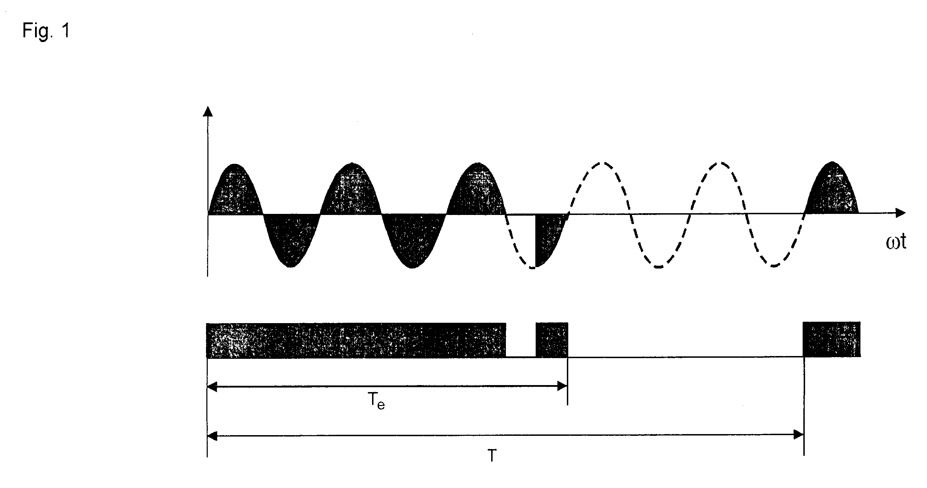

Die Erfindung wird anhand der nachstehenden Zeichnung kurz erläutert. Es zeigt
- Fig. 1: einen Verlauf der Ausgangsspannung eines erfindungsgemäßen Leistungsstellers sowie den Verlauf eines Zündimpulses für einen Leistungshalbleiter des Leistungsstellers.

In Fig. 1 ist in dem oberen Teil der Figur flächig ausgefüllt die Spannung am Ausgang des Leistungsstellers dargestellt. Eine Eingangsspannung ist gestrichelt dargestellt. In den Zeitabschnitten, in denen eine Ausgangsspannung anliegt, ist die Darstellung der Eingangsspannung von der Darstellung der Ausgangsspannung überdeckt. Gleichwohl liegt eine Eingangsspannung an. Sie entspricht idealer Weise der Ausgangsspannung.

Ferner ist in einem unteren Teil der Figur der Verlauf des Zündimpulses dargestellt, der während einer Einschaltzeit Te dafür sorgt, dass der Leistungshalbleiter des Leistungsstellers leitend ist und die Eingangsspannung zum Ausgang durchschaltet.

Der Zündimpuls zündet den Leistungshalbleiter mit dem Beginn eines Taktes T und liegt für fünf halbe Perioden an. In der sechsten halben Periode des Taktes T kommt es zu einem Phasenanschnitt. Der Leistungshalbleiter ist dann nicht für die gesamte halbe Periode durchgeschaltet.

Der Phasenanschnitt während der letzten halben Periode der Einschaltzeit dient der stufenlosen Einstellung der im Takt übertragenen Leistung.

## Patentansprüche

1. Verfahren zum Einstellen der Ausgangsleistung eines Leistungsstellers bei dem der Leistungssteller während einer Einschaltzeit (Tₑ) innerhalb eines Taktes (T) einen Strom von einem Eingang zu einem Ausgang des Leistungsstellers durchlässt, wobei der Takt (T) eine Länge hat, die ein Vielfaches einer Periode einer den Strom treibenden Spannung am Eingang ist,
**dadurch gekennzeichnet, dass**
der Leistungssteller so eingestellt wird, das die Einschaltdauer (Tₑ) in einem eingeschwungenen Zustand wenigstens einen Teil einer halben Periode der Eingangsspannung und längstens alle Perioden des Taktes (T) umfasst, wobei durch einen Phasenanschnitt oder einen Phasenabschnitt während einer halben Periode oder einer ganzen Periode des Taktes die Leistung stufenlos einstellbar ist.

2. Verfahren nach Anspruch 1, **dadurch gekennzeichnet, dass** während genau einer halben Periode oder einer ganzen Periode des Taktes (T) ein Phasenanschnitt oder ein Phasenabschnitt erfolgt.

3. Verfahren nach Anspruch 1 oder 2, **dadurch gekennzeichnet, dass** bei einem Phasenanschnitt oder einem Phasenabschnitt während einer ganzen Periode der Phasenanschnittswinkel bzw. Phasenabschnittswinkel für eine positive Halbwelle und eine negative Halbwelle gleich groß ist.

4. Verfahren zum Einstellen der Ausgangsleistungen von parallel geschalteten Leistungsstellern, wobei die Leistung der Leistungssteller nach einem Verfahren nach einem der Ansprüche 1 bis 3 eingestellt wird, **dadurch gekennzeichnet, dass** die Einschaltzeitpunkte und/oder Abschaltzeitpunkte der Leistungssteller so auf einander abgestimmt sind, dass während einer halben Periode oder einer ganzen Periode eines Taktes (T) nicht bei allen Leistungsstellern gleichzeitig ein Phasenanschnitt oder ein Phasenabschnitt erfolgt.

5. Verfahren nach Anspruch 4, **dadurch gekennzeichnet, dass** während einer halben Periode oder einer ganzen Periode eines Taktes (T) bei genau einem Leistungssteller ein Phasenanschnitt oder ein Phasenabschnitt erfolgt.

6. Verfahren nach Anspruch 4, **dadurch gekennzeichnet, dass** während einer halben Periode oder einer ganzen Periode eines Taktes (T) bei einem Leistungssteller ein Phasenabschnitt mit einem Phasenabschnittswinkel erfolgt und bei einem anderen Leistungssteller ein Phasenanschnitt mit einem Phasenanschnittswinkel erfolgt und die Summe des Phasenabschnittswinkels und des Phasenanschnittswinkels 180° beträgt.

7. Leistungssteller zum Durchführen eines Verfahrens nach einem der Ansprüche 1 bis 6, **dadurch gekennzeichnet, dass** der Leistungssteller eine Steuerung und einen Leistungshalbleiter aufweist, wobei mit der Steuerung der Leistungshalbleiter zum Anfang und während einer halben Periode zündbar bzw. zum Anfang und während einer halben Periode abschaltbar ist.
